# EUROPEAN PATENT SPECIFICATION

(11) **EP 1 650 013 B1**
(45) Date of publication and mention of the grant of the patent: **31.12.2008**
(21) Application number: 04747515.7
(22) Date of filing: 14.07.2004
(51) Int. Cl.: B29D 30/32

(54) **TIRE MOLDING MACHINE AND METHOD OF PRODUCING TIRES**
REIFENFORMMASCHINE UND VERFAHREN ZUR HERSTELLUNG VON REIFEN
MACHINE DE MOULAGE DE PNEUS ET PROCEDE DE PRODUCTION DE PNEUS

(30) Priority: 30.07.2003 JP 2003203658
(43) Date of publication of application: 26.04.2006
(73) Proprietor: Bridgestone Corporation, Tokyo 104-8340 (JP)
(72) Inventor: SAWADA, Chihiro c/o BRIDGESTONE CORPORATION,, Kodaira-shi, Tokyo 187-8531 (JP); TAGA, Makoto c/o BRIDGESTONE CORPORATION,, Kodaira-shi, Tokyo 187-8531 (JP); YAMASAKI, Takeyuki c/o BRIDGESTONE CORPORATION,, Kodaira-shi, Tokyo 187-8531 (JP)
(74) Representative: Whalley, Kevin
(86) International application number: PCT/JP2004/010049
(87) International publication number: WO 2005/011968

(56) References cited:
- EP-A- 1 295 708
- WO-A-03/045675
- WO-A1-03/045675
- JP-A- 4 193 528
- JP-A- 6 320 640
- JP-A- 10 086 240
- JP-A- 2001 030 257
- JP-A- 2002 052 620
- US-A- 3 510 375
- PATENT ABSTRACTS OF JAPAN vol. 1995, no. 02, 31 March 1995 (1995-03-31) -& JP 06 320640 A (BRIDGESTONE CORP), 22 November 1994 (1994-11-22)

## Description

The present invention relates to a method and a machine for building tires, and aims at improving the uniformity of tires and, in particular, the so-called radial force variation ("RFV") level, wherein the radial force may be referred to as "RF".

Uniformity of tires is one of the most important factors in terms of the product quality, and improvement in the uniformity level is a prominent goal of development. With respect to RFV level, among others, efforts have been taken wherein various factors that may degrade the RFV level are investigated one by one, so as to establish appropriate countermeasures, and ensure that such countermeasures are properly taken and managed to thereby improve the RFV level. This does result in some desired improvement, but to a limited extent only.

There are numerous factors that may be correlated to degradation of the RFV level, and it would be practically impossible to take countermeasures with respect to each and every such factor. Therefore, further improvement in the RFV level based on this sort of approach is becoming even more difficult. On the other hand, an advanced method for improving the RVF level irrespective of the factors is under investigation, wherein information based on the RF waveform measured online with respect to a tire of the required size is fed back to the building process so as to perform an online control of the predetermined factors correlated to the RF variation, to thereby provide an improved RFV level. However, an effective control method is yet to be developed.

The present invention has been accomplished in view of such problems of the prior art. It is an object of the present invention to provide a tire building machine and tire building method capable of providing an improved RFV level, wherein information based on an RF waveform that has been measured online, or a waveform of a tire characteristic correlated to such RF waveform is fed back to the building process so as to perform an online control of predetermined factors correlated to the RFV variation, so as to provide an improved RFV level.

The present invention has been conceived to achieve the above-mentioned object, and characteristic features and functions of the present invention will be fully described below.
Attention is also drawn to the disclosures of WO 03/045675A, JP-06-320640A, and US-A-3510375.

A first aspect of the present invention provides a tire building machine comprising a bead core transfer device including a pair of clamp portions for clamping a pair of bead cores, respectively, and placing the clamped bead cores at positions axially spaced from each other by a predetermined distance, and a band drum having an outer peripheral surface for applying a carcass band thereon and causing a radial expansion of at least an axial portion of the carcass band so that it is pressure-bonded to inner peripheral surfaces of the bead cores. The tire building machine further comprises band drum rotation angle control means for rotating the band drum on which the carcass band is applied, by a required angle that is determined by a radial force waveform obtained, before building of a desired tire, with respect to a tire of the same size, or by a characteristic waveform having a correlation to said radial force waveform; and an inclination control mechanism for causing a center axis of at least one of the clamp portions of said bead core transfer device to be inclined relative to a center axis of the band drum, in a predetermined direction, and by a required angle that is determined by said waveform.

The tire building machine constructed as above operates based on a radial force waveform obtained, before building of a desired tire, with respect to a tire of the same size, or by a characteristic waveform having a correlation to the radial force waveform, so as to perform an online control of the relative position or relative angle between the center axis of the carcass band and the center axis of the bead core. Such online control function makes it possible to provide an improved RFV level of the tires, as will be explained below.

As used herein, the term "first order harmonic component" of the waveform refers to a first order component obtained by a Fourier transformation of the waveform. The term "positional deviation" of the center axis of the carcass band and the center axis of the bead core means that these center axes are eccentric to, and parallel with each other, or refers to the amount of eccentricity. The term "angular deviation" between these center axes means that they are inclined relative to each other, or refers to the amount of relative inclination. Both "positional deviation" and "angular deviation" are vector quantities, each having a direction and a magnitude.

In order to provide a significantly improved RFV level of the tires by feeding back information based on an RF waveform of a tire, which has been measured online, and performing an online control of a waveform of an RFV-related factor of a tire to be built at a later timing, such as a waveform of a widthwise position of a tire member in its circumferential direction, it is necessary that the correction for changing the waveform of an RFV-related factor can be uniquely correlated to the resultant change of the RF waveform, and that the magnitude of the change in the RF waveform relative to a unit operation for changing the RFV-related factor, i.e., gain, is large.

The inventors conducted thorough investigation of the waveforms of the RFV-related factors that may be the subject of the control, and found that there is a clear correlation between the first order harmonic component of the waveform ("cord path waveform") obtained by individually measuring the length of the carcass cord ("cord path length") extending between both bead cores, and performing such measurement of the cord path successively in the circumferential direction of the tire, on one hand, and the first order harmonic component of the RF waveform of the tire. To be more specific, it has been found that these first order harmonic components coincide with each other in phase, and are proportional to each other in amplitude. It has also been found that the amplitude and phase of the first order harmonic component of the cord path can be uniquely correlated, respectively, to the magnitude and direction of the positional or angular deviation of the center axis of the bead core, relative to the center axis of a carcass band, which has been cylindrically applied in the building stage.

Based on the results of the above-mentioned investigations, the inventors further found it possible to obtain a presumption formula for presuming a first order harmonic component of the RF waveform that would be generated in a product tire upon setting of the bead cores to the outer peripheries of a cylindrical carcass band, due to the positional or angular deviation between the center axis of the carcass band and the center axis of the bead core, to arrive at a conception that the RFV level can be effectively lowered by performing a correction operation for relatively changing the position or angle of the center axis of the bead core with respect to the center axis of the carcass band. Here, the term "relatively changing" means that the change may be made with respect to any one of the center axis of the bead core and the center axis of the carcass band, or both of these center axes.

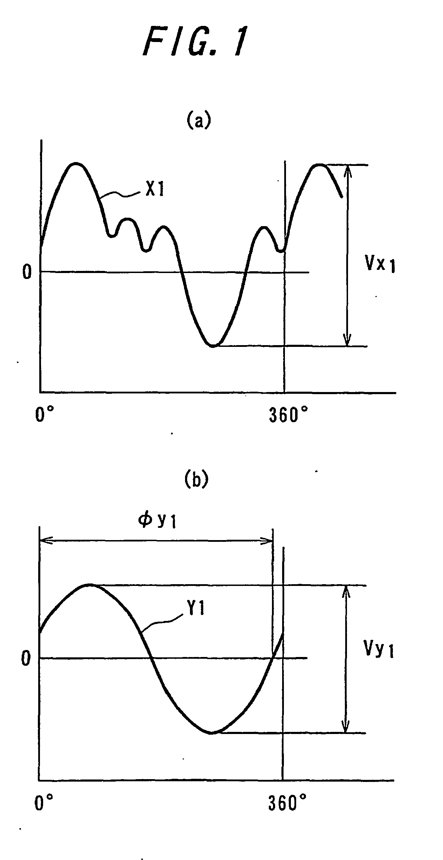

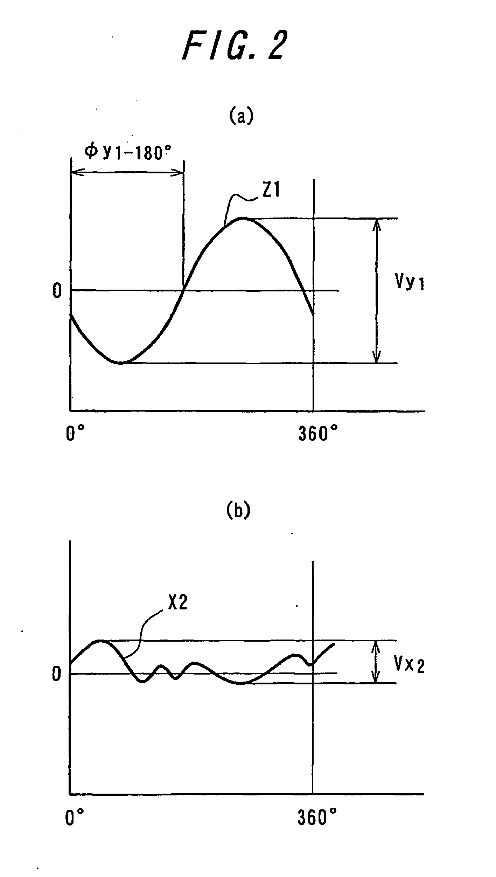

The concept according to the present invention will be explained below with reference to the waveforms shown FIGS. 1(a), 1(b), 2(a) and 2(b), in which the abscissa indicates the circumferential position. As for the origin of the abscissa, for example, when the carcass member is applied to the forming drum, the leading and trailing ends of the carcass member are joined to each other at a predetermined standard position of the forming drum so that the joint position is a common origin for all the waveforms thereby making it possible to correlate the waveforms to each other. The waveform X1 shown in FIG. 1(a) is a waveform of RF in a tire, and the RFV of this tire is Vx1. It is possible to perform Fourier transformation of the waveform shown in FIG. 1(a), so as to obtain a first order harmonic component Y1 as shown in FIG. 2(b), and this first order harmonic component Y1 is identified by an amplitude Vy1 and a phase φy1. Subsequently, this waveform is inverted to obtain an inverted first order harmonic waveform Z1. The inverted first order harmonic waveform is shown in FIG. 2(a), and has an amplitude and phase, which are Vy1 and (φy1 - 180°), respectively.

As mentioned above, the magnitude and the direction of the positional or angular deviation between the center axis of the carcass band and the center axis of the bead core, which would generate the inverted first order harmonic waveform, can be calculated by using the predetermined presumption formula. Furthermore, when a tire having the same size as that subjected to measurement as shown in FIG. 1(a) is to be built by the same building machine, the tire building is performed by controlling and changing at least one of the center axis of the carcass band and the center axis of the bead core in a direction and by an amount, both obtained by the calculation with the presumption formula. This means that the waveforms shown in FIG. 1(a) and FIG. 2(a) are added to each other, so as to allow generation of a presumed RF waveform X2 shown in FIG. 2(b). In the case of this example, although the RVF of the tire would be estimated to be Vx1, if the correction were not applied, it is possible according to the above-mentioned correction method to lower the RFV to Vx2.

Incidentally, it is assumed as a premise that tires built by the same building machine exhibit RF waveforms of the same tendency. Actually, however, even for tires built by the same building machine, other production conditions are often different between the tire for which the RF has been measured, and the tires which are subjected to the control according to the present invention. In this instance, if it is possible to determine the relationship between the measured RF waveform XX of a tire of which the RF has been actually measured, and a presumed RF waveform YY of the tire to be subjected to the control, under an assumption that the control is not performed, an even more effective correction may be performed by preparing a numerical processing formula for reducing the waveform YY from the waveform XX, applying the predetermined numerical processing to the measured waveform XX to calculate the waveform YY, and to apply the above-mentioned correction to the calculated waveform YY, as compared with the case in which the numerical processing is not performed.

For example, consideration is made of a vulcanization-related waveform which is an RF fluctuation due to the fluctuations in the vulcanization stage, such as a dimensional fluctuation in the circumferential direction of the tire vulcanizing mold, etc., and a building-related waveform due to the fluctuations in stages preceding the vulcanization stage. With respect to these waveforms, it is possible to calculate the building-related waveform YY by subtracting known vulcanization-related waveform from the measured RF waveform XX of the product tire, and applying the above-mentioned correction to the calculated waveform YY so as to reduce the amplitude of the building-related waveform YY, while taking appropriate countermeasure as for the vulcanization-related waveform, e.g., minimization of dimensional fluctuation of the mold, to thereby provide an improved RFV.

It has been explained above that the RFV can be improved by controlling the positional or angular deviation between the bead core and the carcass band on the building machine, based on the RF waveform of the product tire. However, instead of the RF waveform of the product tire, it is also possible to measure the radial run-out waveform of a green tire ("RR waveform of GT") and perform control of the positional or angular deviation between the bead core and the carcass band on the building machine based on the RR waveform of GT. It is noted that the RR waveform of GT refers to a waveform of variation in radius at a widthwise center position on the outer periphery of the tread portion of the green tire, which is measured by a distance sensor while a rim is rotated after a green tire has been assembled to the rim and filled with an inner pressure. It is known that the RR waveform of GT has a close correlation to the building-related waveform. Thus, as explained above, it is possible to control the positional or angular deviation between the center axes of the bead core and the carcass band so as to generate an inverted first order harmonic waveform corresponding to the RR waveform of GT as measured, so as to minimize the amplitude of the building-related waveform and eventually provide a reduced RFV level of the product tire.

The method for controlling the positional or angular deviation between the center axes of the bead core and the carcass band based on the RR waveform of GT is to measure the waveform before the vulcanization step for vulcanizing the tire, and makes it possible to measure the waveform immediately after the building of the tire, as the basis for the feed back control of the above-mentioned positional or angular deviation. As a result, it is possible to avoid vulcanization of less inferior tires and produce tires which are excellent in the RFV level.

Since the building machine according to the present invention comprises band drum rotation angle control means for rotating the band drum on which the carcass band is applied, by a required angle that is determined by a radial force waveform obtained, before building of a desired tire, with respect to a tire of the same size, or by a characteristic waveform having a correlation to the radial force waveform; and inclination control mechanism for causing a center axis of at least one of the clamp portions of the bead core transfer device to be inclined relative to a center axis of the band drum, in a predetermined direction, and by a required angle that is determined by the waveform, it is possible to control the direction and magnitude of the angular deviation between the center axis of the carcass band and the center axis of the bead core, so as to generate the above-mentioned inverted first order harmonic waveform and thereby provide an improved RFV of the tires.

As for the means for providing the above-mentioned positional or angular deviation, instead of rotating the carcass band as performed in the tire building machine according to the present invention, an alternative method may be feasible wherein, upon displacement of the center axis of the bead core or the carcass band, not only the magnitude of the displacement, but also the direction of the displacement is controlled. However, the tire building machine according to the present invention utilizes an existing function of rotating the band drum, which function is usually provided, so that it would be sufficient for the mechanism for displacing the center axis of the bead core or the carcass band to have only a one freedom degree, with the result that the means for providing the above-mentioned angular deviation may be simplified to save the cost and space for the equipment, as compared to the alternative method.

The tire building machine according to the invention further comprises a forming drum for applying to a radially outer side of a carcass band, which has been transferred from the band drum and to which the bead cores have already been applied, remaining tire constituting members, and forming drum rotation angle control means for rotating the forming drum by the angle at which the carcass band drum has been rotated by the band drum rotation angle control means, in an opposite direction.

The tire building machine according to the invention thus further comprises a forming drum for applying to a radially outer side of a carcass band, to which the bead cores have already been applied, remaining tire constituting members. However, due to the provision of forming drum rotation angle control means for rotating the forming drum so as to return the carcass band back to the rotational position before the application of the bead cores, it is possible to maintain the joint positions of the carcass band constituting members, such as carcass member or inner liners, and also maintain the positional relationship, about the center axis, between the remaining tire constituting members applied after the setting of the bead cores, such as the belt member or tread rubber member, both substantially constant, notwithstanding the above-mentioned rotational angle of the carcass band. By this, it is possible to maintain the optimally predetermined positional relationship of each member relative to the joint position, to realize the well-balanced tire performance.

A second aspect of the present invention provides a tire building machine comprising a forming drum having an outer peripheral surface for applying a carcass band thereon, for causing a radial expansion of only an axially center portion of the carcass band, and a bead setter device including a pair of clamp portions for clamping a pair of bead cores, respectively, and moving the clamp portions so that the clamped bead cores are urged from axially outer sides to stepped surfaces formed at said surfaces of the expanded center portion of the carcass band, to thereby set the bead cores to the carcass band. The tire building machine further comprises forming drum rotation angle control means for rotating the forming drum on which the carcass band is applied, by a required angle that is determined by a radial force waveform obtained, before building of a desired tire, with respect to a tire of the same size, or by a characteristic waveform having a correlation to the radial force waveform; and an eccentricity control means for moving a center axis of at least one of the clamp portions of the bead setter device relative to a center axis of the forming drum, to an eccentric position in a predetermined direction, and by a required distance that is determined by the waveform.

Since the building machine according to the second aspect of the present invention comprises forming drum rotation angle control means for rotating the forming drum on which the carcass band is applied, by a required angle that is determined by a radial force waveform obtained, before building of a desired tire, with respect to a tire of the same size, or by a characteristic waveform having a correlation to the radial force waveform, and an eccentricity control means for moving a center axis of at least one of the clamp portions of the bead setter device relative to a center axis of the forming drum, to an eccentric position in a predetermined direction, and by a required distance that is determined by the waveform, it is possible to control the direction and magnitude of the positional deviation between the center axis of the carcass band and the center axis of the bead core, so as to generate the above-mentioned inverted first order harmonic waveform and thereby provide an improved RFV of the tires.

As for the means for providing the above-mentioned positional or angular deviation, instead of rotating the carcass band as performed in the tire building machine according to the present invention, an alternative method may be feasible wherein, upon eccentric displacement of the center axis of the bead core or the carcass band, not only the magnitude of the displacement, but also the direction of the displacement is controlled. However, the tire building machine according to the present invention utilizes an existing function of rotating the band drum by a required angle, which function is usually provided, so that it would be sufficient for the mechanism for causing an eccentric displacement of the center axis of the bead core or the carcass band to have only a one freedom degree, with the result that the means for providing the above-mentioned positional deviation may be simplified to save the cost and space for the equipment, as compared to the alternative method.

In the tire building machine according to the second aspect of the invention, said forming drum rotation angle control means is adapted to cause said forming drum, on which said carcass band is applied and said bead cores have been set, to be rotated by said angle for rotating the carcass band, in an opposite direction.

Since such a tire building machine comprises a forming drum rotation angle control means that is adapted to cause said forming drum, on which the carcass band is applied and the bead cores have been set, to be rotated by the same angle for rotating the carcass band, in an opposite direction, it is possible to maintain the joint positions of the carcass band constituting members, such as carcass member or inner liners, and also maintain the positional relationship, about the center axis, between the remaining tire constituting members applied after the setting of the bead cores, such as the belt member or tread rubber member, both substantially constant, notwithstanding the above-mentioned rotational angle of the carcass band. By this, it is possible to maintain the optimally predetermined positional relationship of each member relative to the joint position, to realize the well-balanced tire performance.

A third aspect of the present invention provides a method for building a tire comprising bead cores, and a carcass extending toroidally between the bead cores and having side portions that are turned-up radially outwards around the bead cores, wherein said method comprises: preparing a presumption formula for presuming a first order harmonic component of a radial run-out waveform toroidal carcass body that generates positional or angular deviation between a center axis of a cylindrical carcass band and a center axis of the bead core; measuring a radial run-out of the toroidal carcass body along its entire circumference, and obtaining an inverted first order harmonic waveform by inverting a measured waveform of the radial run-out, or by inverting a first order harmonic component extracted from said measured waveform of the radial run-out; obtaining, upon subsequent building of a tire having the same size as said tire by the same building machine, a positional or angular deviation between a center axis of a cylindrical carcass band and a center axis of the bead core, which generates said inverted first order harmonic waveform, based on calculation using said presumption formula; and changing the relative position or relative angle between the center axis of at least one of said bead cores and the center axis of the carcass band, in a direction of the deviation and by an amount of the deviation, obtained by said presumption formula, respectively, so as to set the bead cores to the carcass band.

The method of the invention uses, instead of the above-explained RF waveform of tires or RR waveform of GT, the radial run-out RR of the toroidal carcass body TC, and controls the positional or angular deviation of the center axes of the bead cores and the carcass band, so as to generate the inverted first order harmonic waveform based on the RR of TC.

The RR waveform of TC refers to a waveform of variation in radius at a widthwise center position of a toroidal carcass body, i.e., an intermediate molded body obtained by clamping those portions of the carcass band, which correspond to the bead cores, respectively, by reducing the distance between the bead cores and filling an inner pressure to the carcass band portion that extends between the bead cores so as to cause an expansion in to a toroidal shape, and folding portions of the carcass band on both outer sides of the bead cores, as seen in the width direction, around the respective bead cores. It is known that the RR waveform of TC has a close correlation to the building-related waveform of the above-mentioned RF of the product tire. Thus, as explained above, it is possible to control the positional or angular deviation between the center axes of the bead core and the carcass band so as to generate an inverted first order harmonic waveform corresponding to the RR waveform of TC as measured, so as to minimize the amplitude of the building-related waveform and eventually provide a reduced RFV level of the product tire.

The method for controlling the positional or angular deviation between the center axes of the bead core and the carcass band based on the RR waveform of TC is to measure the RR before the application of the belt member or the tread rubber member, and makes it possible to minimize the feed-back delay of the measured result and promptly perform the correction and optimize the positional relationship between the carcass band and the bead cores, before these members are applied.

The invention will be further described with reference to the accompanying drawings, wherein
FIGS. 1(a) and 1(b) are RF waveform charts useful for understanding the tire building machine according to the present invention;
FIGS. 2(a) and 2(b) are also RF waveform charts useful for understanding the tire building machine according to the present invention;
FIG 3 is a schematic front view showing a tire building machine according to a first embodiment of the present invention;
FIG. 4 is a front view of the bead setter as seen in the direction of arrows IV-IV in FIG. 3;
FIG. 5 is side view of the bead setter as seen in the direction of arrows V-V in FIG. 4;
FIGS. 6(a) and 6(b) are schematic views showing the forming drum from the axial direction;
FIG. 7 is a schematic front view showing a tire building machine according to a second embodiment of the present invention;
FIG. 8 is a side view showing a traveling base portion of the bead core transfer device;
FIG. 9 is a cross-sectional view taken along the line IX-IX in FIG. 8;
FIGS. 10(a) and 10(b) are schematic views showing the band drum and the forming drum from the axial direction, respectively;
FIGS. 11(a) to 11(c) are longitudinal-sectional views along the center axis of the carcass band, explaining the steps for setting the bead cores to the carcass band;
FIGS. 12(a) and 12(b) are longitudinal-sectional views explaining the steps performed after the steps of FIGS. 11(a) to 11(c); and
FIG. 13 is a flowchart showing the tire manufacturing method according to a third embodiment of the present invention.

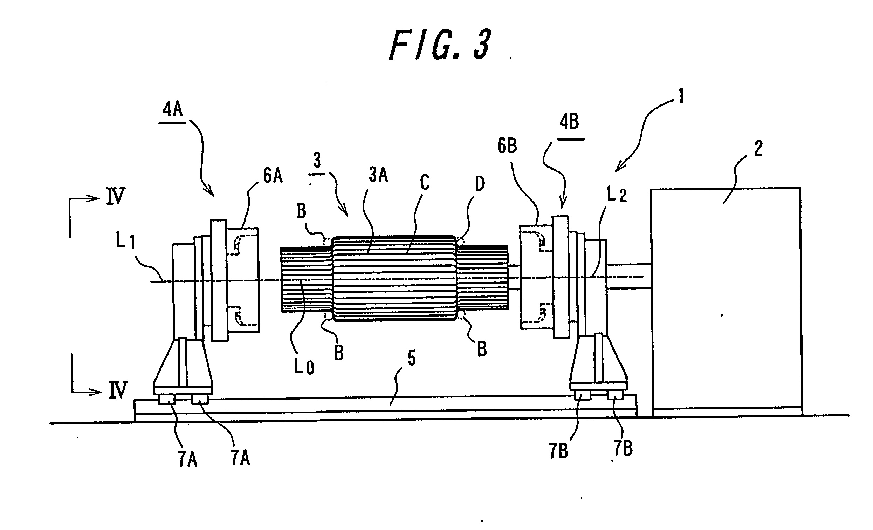

A first embodiment of the present invention will be described below with reference to FIGS. 3 to 6. As explained above, FIG. 3 is a schematic front view showing a tire building machine 1 according to a first embodiment of the present invention. The tire building machine 1 includes a main body 2 of the machine, a forming drum 3 which is rotatably supported in a cantilever manner by the main body 2, for forming a carcass band C thereon by applying an inner liner member and a carcass member, bead setters 4A, 4B which are arranged on both axial sides of the forming drum 3, respectively, so as to be movable in the axial direction, rails 5 which are fixedly arranged and oriented in the axial direction, and traveling guides 7A, 7B which are secured to the bead setters 4A, 4B, respectively, for supporting the bead setters, and adapted to travel along the rails 5.

In FIG. 3, the tire building machine 1 is shown as assuming a position wherein, after formation of a cylindrical carcass band C on the forming drum 3, the center portion 3A of the forming drum 3 is radially expanded to cause a radial expansion of the center portion of the carcass band C such that stepped surfaces D are formed on both sides of the center portion of the carcass band.

Each bead setter 4A, 4B includes a clamp portion 6A, 6B for clamping the relevant bead core B. The clamp portions 6A, 6B are axially moved toward the center portion so that the bead cores B are urged against the stepped surfaces D of the carcass band C to thereby set the bead cores to the carcass band.

The tire building machine 1 has an arrangement wherein the clamp portion 6A of the bead setter 4A on the left side, for example, has a center axis L1 which can be displaced in a horizontal plane in a direction perpendicular to the shaft, by a required amount while maintaining a parallel relationship with reference to the center axis L0 of the tire building machine 1, and wherein the forming drum 3 can be stopped at a required rotational position about its center axis. The displacement of the center axis L1 in a horizontal plane makes it possible to control the amplitude of the first order harmonic waveform of the cord path waveform, while the rotation of the forming drum 3 makes it possible to control the phase of the first order harmonic waveform of the cord path waveform, to the respectively required values. Such function of the tire building machine will be more fully described below.

It is noted that, in the embodiment shown in FIG. 3, the clamp portion 6B of the bead setter 4B on the right side has a center axis L2 which is fixed. However, the center axis L2 of the bead setter 4B on the right side may be displaced in the same direction and by the same amount as the bead setter 4A on the left side. In this instance, an functional advantage is achieved whereby the characteristics of the green tire can be made more symmetrical on the right and left sides.

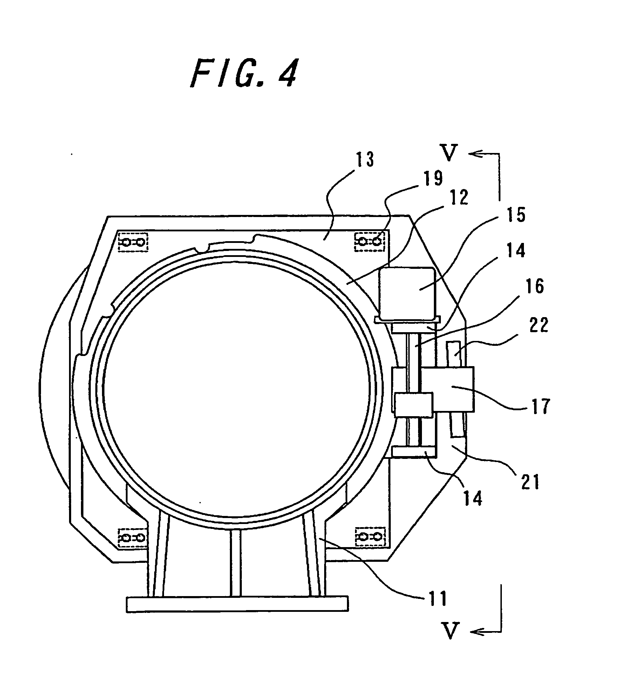

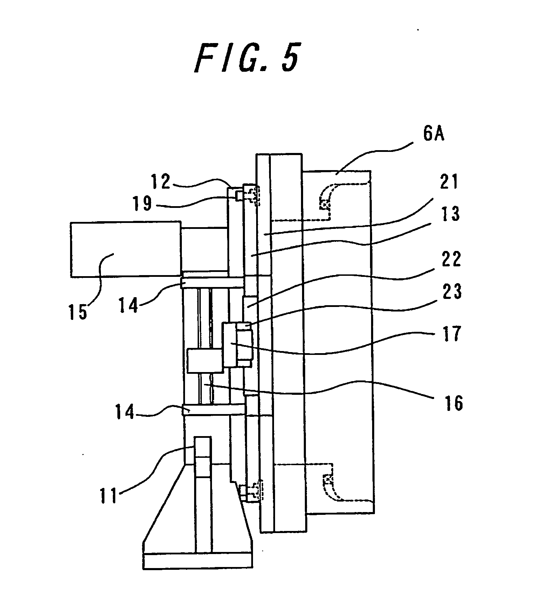

As mentioned above, FIG. 4 is a front view of the bead setter 4A on the left side, as seen in the direction of arrows IV-IV in FIG. 3, and FIG. 5 is side view of the bead setter 4A as seen in the direction of arrows V-V in FIG. 4. The bead setter 4A comprises a base 11, a mounting plate 13 which is secured to the base 11 through an intermediate ring 12, a servomotor 15 mounted on the mounting plate 13 through a bracket 14, a screw-threaded shaft 16 which is vertically arranged and rotatably supported by the bracket 14 so as to be driven by the servomotor 15, a movable block 17 which is threadedly engaged with the screw-threaded shaft 16 so as to be moved vertically upwards and downwards as the screw-threaded shaft 16 is rotated, and a horizontally movable plate 21 which is guided by pins 19 provided for the mounting plate 13 so as to be movable back and forth in the horizontal direction. The horizontally movable plate 21 is fixedly provided with an inclined guide 22, which is slightly inclined relative to the vertical direction, and also with the above-mentioned clamp portion 6A. while the movable block 17 is fixedly provided with an inclined guide engaging portion 23, which engages with the inclined guide 22.

In the bead setter 4A, when the servomotor 15 is driven to rotate the screw-treaded shaft 16, the movable block 17 is caused to move in the vertical direction. It is assumed that the horizontally movable plate 21 is restrained so as to be movable only in the horizontal direction. Since the inclined guide 22 provided for the movable block 17 is engaged with the inclined guide engaging portion 23 of the movable block 17, as mentioned above, the rotation of the screw-threaded shaft 16 causes the horizontally movable plate 21 to be moved in the horizontal direction.

Assuming that the inclined guide 22 forms an angle α relative to the vertical direction, the horizontally movable plate 21 is moved in the horizontal direction by a distance which is tan α times the distance which the movable block 17 is moved in the vertical direction. Thus, by adjusting the rotation angle of the servomotor 15, it is possible to move the center axis of the clamp portion 6A secured to the horizontally movable plate 21 in the horizontal direction relative to the center axis of the forming drum 3 by the required amount and in eccentric manner keeping the parallel relationship therebetween. Also, if tan α is reduced, the accuracy of the stopping position of the horizontally movable plate 21 is improved by the reduced amount so that the center axis L1 of the clamp portion 6A can be positioned in the horizontal direction with higher accuracy.

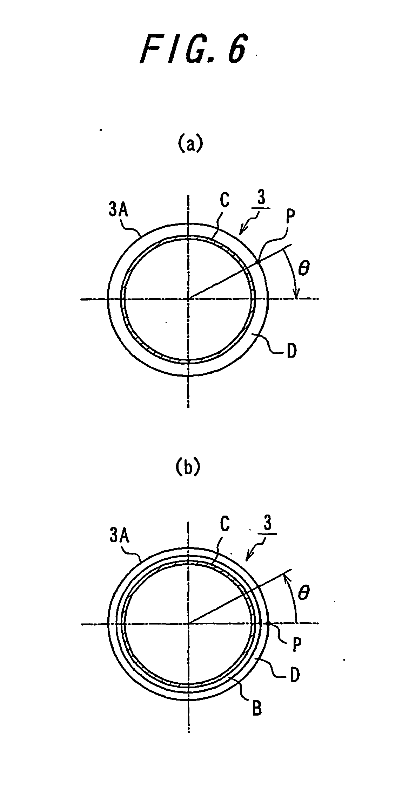

When the bead core B is set to the carcass band C in the illustrated embodiment, as mentioned above, the clamp portion 6A of the bead setter 4A is moved in the horizontal direction so as to move the center axis of the bead core B in the same direction in eccentric manner. At the same time, as shown in FIG. 6(a) which is a schematic view of the forming drum as seen from the axial direction, after the formation of the carcass band C but before the setting of the bead cores B thereto, the forming drum 3 is rotated by an angle θ, under the control of forming drum rotation angle control means, not shown, such that the peak of the inverted first order harmonic waveform to be generated has a circumferential position which is oriented in the horizontal direction. After the bead cores B have subsequently been set to the carcass band C, the forming drum 3 is rotated as shown in FIG. 6(b) by the same angle θ as the previous rotation, but in the opposite direction.

By the above-mentioned operations, it is possible to generate the required inverted first order harmonic waveform in an optimally adjusted manner, to accurately maintain the desired positional relationship between the tire constituting members.

The tire building machine 1 according to the present invention has been explained above with reference to an example wherein the clamp portion 6A is movable as being constrained in a horizontal plane. However, the clamp portion may be constrained in a vertical plane or in a plane extending in any direction.

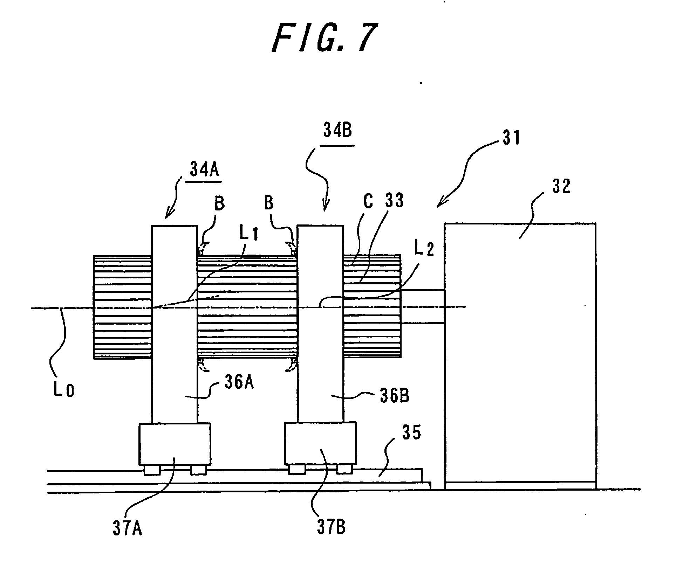

A second embodiment of the tire building machine according to the present invention will be explained below with reference to FIGS. 7 to 12. As explained above, FIG. 7 is a schematic front view of the tire building machine 31 according to the second embodiment. The tire building machine 31 includes a main body 32 of the machine, a band drum 33 which is rotatably supported in a cantilever manner by the main body 2, for applying tire constituting members including a carcass band C, bead core transfer devices 34A, 34B which are arranged on both axial sides of the band drum 33, respectively, so as to be movable in the axial direction, and rails 35 for supporting these elements and guiding them in the axial direction.

The bead core transfer device 34A, 34B are, respectively, provided with clamp portions 36A, 36B for clamping the bead cores B, and traveling base portions 37A, 37B for supporting them and adapted to travel along the rails 5. In FIG. 7, the tire building machine 31 is shown as assuming a position wherein, after application of the carcass band C onto the band drum 33, the bead core transfer devices 34A, 34B clamping the bead cores B have been moved in the axial direction to predetermined axial positions on the outer periphery of the band drum 33.

The band drum 33 can be then radially expanded so as to urge the carcass band C to the inner peripheral surfaces of the bead cores B, which are clamped by the clamp portions 36A, 36B, so as to set the bead cores B to the carcass band C.

The tire building machine 31 has an arrangement wherein the clamp portion 36A of the bead setter 34A on the left side, for example, has a center axis L1 which can be inclined in a vertical plane by a required angle, and wherein the band drum 33 can be stopped at a required rotational position about its center axis. The inclination of the center axis L1 in a vertical plane makes it possible to control the amplitude of the first order harmonic waveform of the cord path waveform, while the rotation of the band drum 33 makes it possible to control the phase of the first order harmonic waveform of the cord path waveform, to the respectively required values. Such function of the tire building machine will be more fully described below.

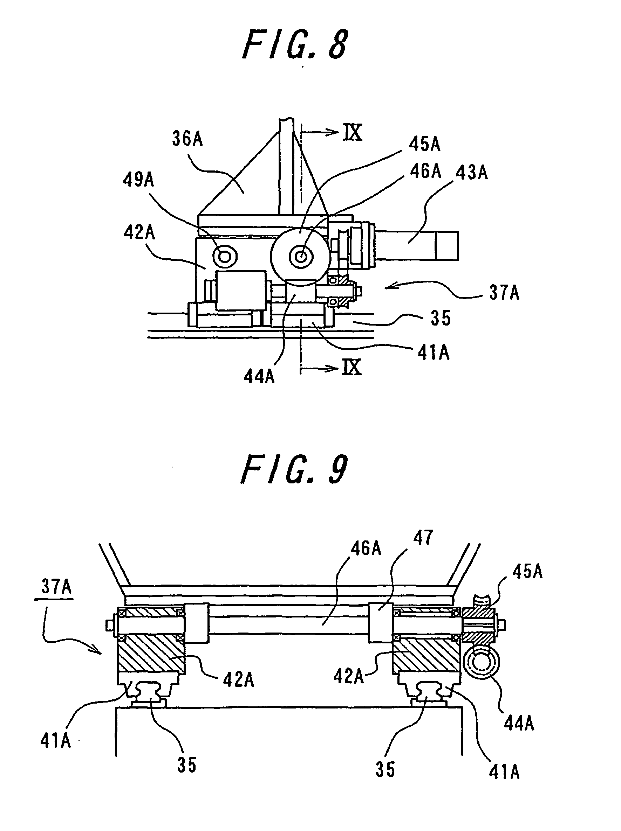

As mentioned above, FIG. 8 is a side view showing a traveling base portion of the bead core transfer device, and FIG. 9 is a cross-sectional view taken along the line IX-IX in FIG. 8. The traveling base portion 37A of the bead transfer device 34A comprises a runner 41A which is movable along the rails 35, and a base block 42A which is fixedly connected to the runner 41A. The base block 42A is fixedly provided with a pivot 49A which extends in the horizontal direction, and the clamp portion 36A is arranged so that it can swing about the pivot 49A. Thus, the clamp portion 36A is permitted to swing about the pivot 49A in a vertical plane.

The base block 42A is provided with a servomotor 43A, a worm 44A connected to the output shaft of the servomotor 43A, and a worm wheel 45A which is meshed with the worm 44A and directly connected to a drive shaft 46A to rotate the same. The drive shaft 46A extends in parallel with the pivot 49A, and has an eccentric cross-section. The drive shaft 46A is rotatably supported by the base block 42A, and engaged with an elongated hole formed in a bearing member 47 which is connected to the clamp portion 36A.

When the servomotor 43A is rotated by a predetermined angle so as to rotate the drive shaft 46A through the worm 44A and the worm wheel 45A, the engaging position between the eccentric drive shaft 46A and the elongated hole in the bearing member 47 is changed, so that the clamp portion 36A is caused to swing about the pivot 49A to thereby incline the center axis of the clamp portion 36A in the vertical plane by a required angle.

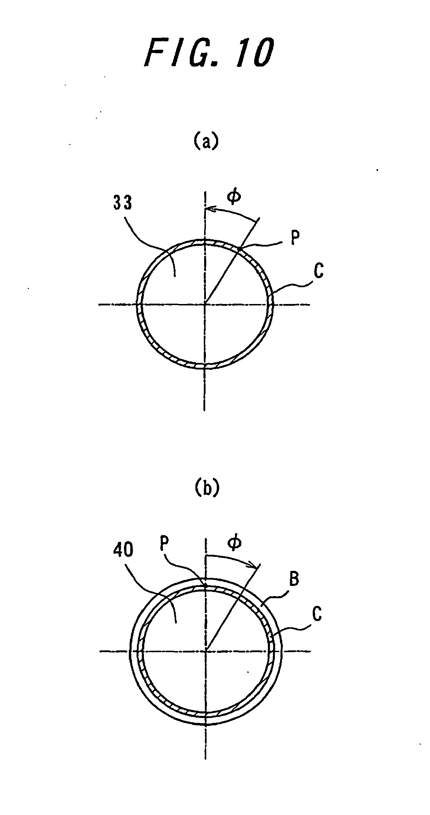

When the bead core B is set to the carcass band C in the illustrated embodiment, as mentioned above, the clamp portion 36A of the bead transfer device 34A is inclined so as to incline the center axis of the bead core B in the vertical plane. At the same time, as shown in FIG. 10(a) which is a schematic view of the band drum 33 as seen from the axial direction, after the formation of the carcass band C but before the setting of the bead cores B thereto, the band drum 33 is rotated by an angle φ, under the control of band drum rotation angle control means, not shown, such that the peak of the inverted first order harmonic waveform to be generated has a circumferential position which is oriented in the vertical direction.

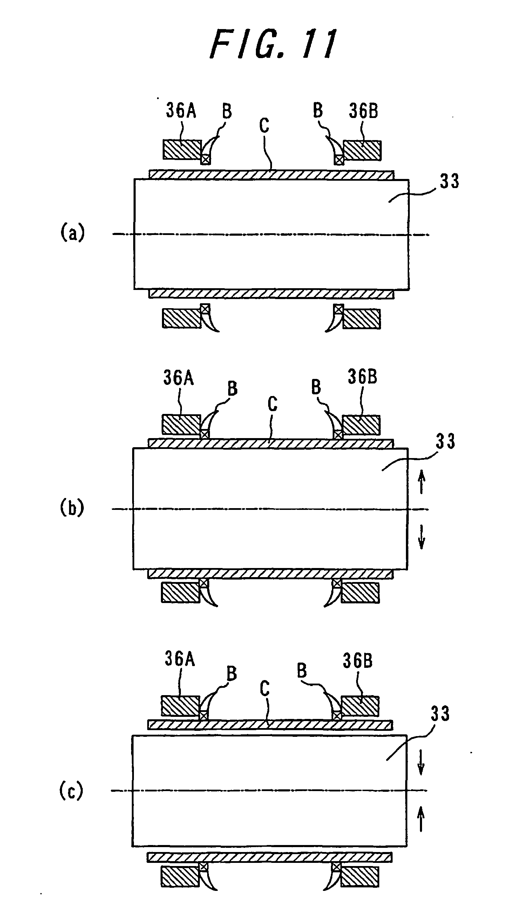

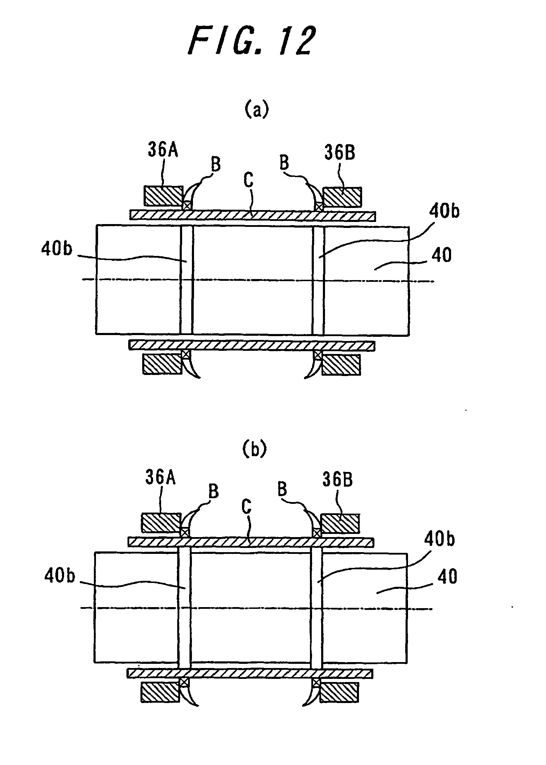

FIGS. 11(a) to 11(c) and FIGS. 12(a) and 12(b) are longitudinal-sectional views along the center axis of the carcass band C, explaining the steps for setting the bead cores B to the carcass band C. As shown in FIG. 11(a), the carcass band C formed on the band drum 33 is caused to rotate by the above-mentioned required angle φ, and the bead cores clamped by the clamp portions 36A, 36B of the bead setters 34A, 34B are then placed on the outer periphery of the carcass band C. Subsequently, as shown in FIG. 11(b), the band drum 33 is radially expanded so that the outer peripheral surface of the carcass band C is tightly urged under pressure against the inner peripheral surfaces of the bead cores B. Further, as shown in FIG. 11(c), when the band drum 33 is subsequently retracted in the radial direction to have a reduced diameter, the carcass band C to which the bead cores have been set is transferred to the bead transfer devices 34A, 34B as being clamped by the clamp portions 36A, 36B.

FIG. 12(a) shows that the carcass band C assembled with the bead cores B is clamped by the bead transfer devices 34A, 34B and placed on the radially outer side of a forming drum 40. After such a state has been achieved, as shown in FIG. 12(b), bead lock portions 40b of the forming drum 40 are radially expanded so as to clamp those portions of the carcass band, which correspond to the bead cores, respectively. By this, the carcass band C assembled with the bead cores B is clamped on the outer periphery of the forming drum 40. Subsequently, the clamp portions 36A, 36B are radially expanded so as to allow the bead core transfer devices 34A, 34B to be retracted from the outer peripheral position of the forming drum 40, thereby transferring the carcass band assembled with the bead cores, onto the forming drum 40.

Subsequently, as shown in FIG. 10(b) which is a schematic view of the forming drum 40 as seen from the axial direction, the forming drum 40 is rotated by a forming drum rotation angle control means, not shown, by the same angle φ, with which the band drum 33 has been previously rotated, but in the opposite direction. By this, it is possible to maintain the predetermined joint position of each member, thereby making it possible to manufacture stable and well-balanced tires.

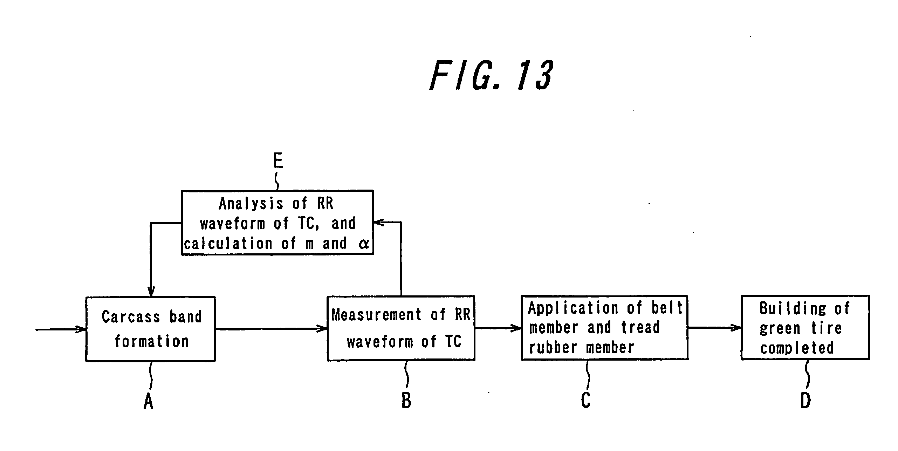

A flowchart showing the tire manufacturing method according to a third embodiment of the present invention is shown in FIG. 13. In this instance, upon building of a green tire, a carcass band is formed (step A), and a toroidal carcass body (TC) is then formed by deforming the carcass band into a toroidal shape and folding up the end portions of the carcass band around the bead cores, before a belt member and a tread rubber member are applied (step C) so as to complete the formation of a green tire (step D). According to the present invention, however, before the application of the belt member and the tread rubber member (step C), the RR waveform of the TC is measured (step B), and the measured waveform is analyzed according to the procedure similar to that explained above with reference to the RF of the tire, so as to determine an inverted first order harmonic waveform corresponding to the RR waveform of the TC, based on which calculations are performed to determine the magnitude m and the direction α of the positional or angular deviation, upon setting of the bead cores to the carcass band of a next tire to be manufactured (step E), and the tire building machine is controlled so as to generate the above-mentioned positional or angular deviation, and to set the bead cores to the carcass band, so as to form a carcass band assembled with the bead cores (step A).

It will be appreciated from the foregoing description that, with the tire building machine according to the present invention, due to the provision of a band drum rotation angle control means for rotating a band drum applied with a carcass band, by a required angle determined on the basis of the radial force waveform of a tire of the same size measured prior to the tire building, or the characteristic waveform of a tire correlated therewith, and an inclination control mechanism for inclining the center axis of at least one of the grip sections of a bead core transfer device with respect to the axis of the band drum in a predetermined direction by the required angle determined on the basis of the aforesaid waveform, it is possible to provide an improved RFV level by means of a simple mechanical measure. Also, since the bead cores are set to the carcass band by controlling a positional or angular deviation between the center axes of the bead cores and the carcass band, so as to generate an inverted first order harmonic waveform based on the RR waveform of the TC, degradation of the RR of the TC can be promptly compensated, which also serves to provide an improved RFV level.

## Claims

1. A tire building machine (31) comprising a bead core transfer device (34A, 34B) including a pair of clamp portions (36A, 36B) for clamping a pair of bead cores (B), respectively, and placing the clamped bead cores at positions axially spaced from each other by a predetermined distance, and a band drum (33) having an outer peripheral surface for applying a carcass band (C) thereon and causing a radial expansion of at least an axial portion of the carcass band so that it is pressure-bonded to inner peripheral surfaces of the bead cores (B), said tire building machine further comprising:
band drum rotation angle control means for rotating the band drum (33) on which the carcass band (C) is applied, by a required angle (φ) that is determined by a radial force waveform obtained, before building of a desired tire, with respect to a tire of the same size, or by a characteristic waveform having a correlation to said radial force waveform;
an inclination control mechanism (43A, 44A, 45A, 46A, 47, 49A) for causing a center axis of at least one of the clamp portions (36A, 36B) of said bead core transfer device (34A, 34B) to be inclined relative to a center axis of the band drum, in a predetermined direction, and by a required angle that is determined by said waveform;
a forming drum (40) for applying to a radially outer side of a carcass band (C), which has been transferred from said band drum (33) and to which said bead cores (B) have already been applied, remaining tire constituting members; and
forming drum rotation angle control means for rotating the forming drum (40) by said angle (φ) at which the carcass band drum (33) has been rotated by said band drum rotation angle control means, in an opposite direction.

2. A tire building machine (1) comprising a forming drum (3) having an outer peripheral surface for applying a carcass band (C) thereon, for causing a radial expansion of only an axially center portion of the carcass band, and a bead setter device (4A, 4B) including a pair of clamp portions (6A, 6B) for clamping a pair of bead cores, respectively, and moving the clamp portions so that the clamped bead cores (B) are urged from axially outer sides to stepped surfaces (D) formed at said surfaces of the expanded center portion of the carcass band, to thereby set the bead cores to the carcass band, said tire building machine further comprising:
forming drum rotation angle control means for rotating the forming drum (3) on which the carcass band (C) is applied, by a required angle (θ) that is determined by a radial force waveform obtained, before building of a desired tire, with respect to a tire of the same size, or by a characteristic waveform having a correlation to said radial force waveform; and
an eccentricity control means (15, 16, 17, 21, 22, 23) for moving a center axis of at least one of said clamp portions (6A, 6B) of the bead setter device (4A, 4B) relative to a center axis of the forming drum (3), to an eccentric position in a predetermined direction, and by a required distance that is determined by said waveform,
wherein said forming drum rotation angle control means is adapted to cause said forming drum (3), on which said carcass band (C) is applied and said bead cores (B) have been set, to be rotated by said angle (θ) for rotating the carcass band, in an opposite direction.

3. A method for building a tire comprising bead cores, and a carcass extending toroidally between the bead cores and having side portions that are turned-up radially outwards around the bead cores, wherein said method comprises:
preparing a presumption formula for presuming a first order harmonic component of a radial run-out waveform toroidal carcass body that generates positional or angular deviation between a center axis of a cylindrical carcass band (C) and a center axis of the bead core (B);
measuring a radial run-out of the toroidal carcass body along its entire circumference, and obtaining an inverted first order harmonic waveform by inverting a measured waveform of the radial run-out, or by inverting a first order harmonic component extracted from said measured waveform of the radial run-out;
obtaining, upon subsequent building of a tire having the same size as said tire by the same building machine, a positional or angular deviation between a center axis of a cylindrical carcass band and a center axis of the bead core, which generates said inverted first order harmonic waveform, based on calculation using said presumption formula; and
changing the relative position or relative angle between the center axis of at least one of said bead cores and the center axis of the carcass band, in a direction of the deviation and by an amount of the deviation, obtained by said presumption formula, respectively, so as to set the bead cores to the carcass band.

## Patentansprüche

1. Reifenaufbaumaschine (31), die aufweist: eine Wulstkernübertragungsvorrichtung (34A, 34B), die ein Paar Klemmabschnitte (36A, 36B) für das Festklemmen jeweils eines Paares von Wulstkernen (B) und das Anordnen der festgeklemmten Wulstkerne in Positionen einschließt, die axial voneinander um einen vorgegebenen Abstand beabstandet sind; und eine Bandtrommel (33) mit einer äußeren Umfangsfläche für das Aufbringen eines Karkassenbandes (C) darauf und das Veranlassen einer radialen Expansion von mindestens einem axialen Abschnitt des Karkassenbandes, so dass es an den inneren Umfangsflächen der Wulstkerne (B) mittels Druck gebunden wird, wobei die Reifenaufbaumaschine außerdem aufweist:
eine Steuereinrichtung für den Bandtrommelrotationswinkel für das Drehen der Bandtrommel (33), auf der das Karkassenband (C) aufgebracht ist, um einen erforderlichen Winkel (Φ), der durch eine erhaltene Radialkraftwellenform, vor dem Aufbauen eines gewünschten Reifens, mit Bezugnahme auf einen Reifen der gleichen Größe oder durch eine charakteristische Wellenform bestimmt wird, die eine Wechselbeziehung zur Radialkraftwellenform aufweist;
einen Neigungssteuermechanismus (43A, 44A, 45A, 46A, 47, 49A), um zu veranlassen, dass eine Mittelachse von mindestens einem der Klemmabschnitte (36A, 36B) der Wulstkernübertragungsvorrichtung (34A, 34B) relativ zu einer Mittelachse der Bandtrommel in einer vorgegebenen Richtung und um einen erforderlichen Winkel geneigt wird, der durch die Wellenform bestimmt wird;
eine Formgebungstrommel (40) für ein Aufbringen der restlichen Reifenbestandteile auf eine radial äußere Seite eines Karkassenbandes (C), das von der Bandtrommel (33) übertragen wurde, und auf das die Wulstkerne (B) bereits aufgebracht wurden; und
eine Steuereinrichtung für den Formgebungstrommelrotationswinkel für das Drehen der Formgebungstrommel (40) um den Winkel (Φ), mit dem die Karkassenbandtrommel (33) durch die Steuereinrichtung für den Bandtrommelrotationswinkel in einer entgegengesetzten Richtung gedreht wurde.

2. Reifenaufbaumaschine (1), die aufweist: eine Formgebungstrommel (3) mit einer äußeren Umfangsfläche für das Aufbringen eines Karkassenbandes (C) darauf, um eine radiale Expansion von nur einem axial mittleren Abschnitt des Karkassenbandes zu verursachen; und eine Wulstsetzvorrichtung (4A, 4B), die ein Paar Klemmabschnitte (6A, 6B) für das Festklemmen von jeweils einem Paar Wulstkernen und das Bewegen der Klemmabschnitte einschließt, so dass die festgeklemmten Wulstkerne (B) von axial äußeren Seiten zu abgestuften Flächen (D) getrieben werden, die auf den Oberflächen des expandierten mittleren Abschnittes des Karkassenbandes gebildet werden, um **dadurch** die Wulstkerne auf das Karkassenband zu setzen, wobei die Reifenaufbaumaschine außerdem aufweist:
eine Steuereinrichtung für den Formgebungstrommelrotationswinkel für das Drehen der Bandtrommel (3), auf der das Karkassenband (C) aufgebracht ist, um einen erforderlichen Winkel (θ), der durch eine erhaltene Radialkraftwellenform, vor dem Aufbauen eines gewünschten Reifens, mit Bezugnahme auf einen Reifen der gleichen Größe oder durch eine charakteristische Wellenform bestimmt wird, die eine Wechselbeziehung zur Radialkraftwellenform aufweist; und
eine Exzentrizitätssteuereinrichtung (15, 16, 17, 21, 22, 23) für das Bewegen einer Mittelachse von mindestens einem der Klemmabschnitte (6A, 6B) der Wulstsetzvomichtung (4A, 4B) relativ zu einer Mittelachse der Formgebungstrommel (3) zu einer exzentrischen Position in einer vorgegebenen Richtung und um eine erforderliche Strecke, die durch die Wellenform bestimmt wird,
wobei die Steuereinrichtung für den Formgebungstrommelrotationswinkel angepasst ist, um zu bewirken, dass die Formgebungstrommel (3), auf der das Karkassenband (C) aufgebracht ist und die Wulstkerne (B) gesetzt wurden, um den Winkel (θ) für das Drehen des Karkassenbandes in einer entgegengesetzten Richtung gedreht wird.

3. Verfahren zum Aufbauen eines Reifens, der Wulstkerne und eine Karkasse aufweist, die sich ringförmig zwischen den Wulstkernen erstreckt und Seitenabschnitte aufweist, die radial nach außen um die Wulstkerne umgestülpt werden, wobei das Verfahren die folgenden Schritte aufweist:
Bereitstellen einer Annahmeformel für das Annehmen einer harmonischen Komponente erster Ordnung eines ringförmigen Karkassenkörpers mit Rundlaufabweichungswellenform, die eine Positions-oder Winkelabweichung zwischen einer Mittelachse eines zylindrischen Karkassenbandes (C) und einer Mittelachse des Wulstkernes (B) erzeugt;
Messen der Rundlaufabweichung des ringförmigen Karkassenkörpers längs seines gesamten Umfanges und Erhalten einer umgekehrten harmonischen Wellenform erster Ordnung durch Umkehren einer gemessenen Wellenform der Rundlaufabweichung oder durch Umkehren einer harmonischen Komponente erster Ordnung, die aus der gemessenen Wellenform der Rundlaufabweichung herausgelöst wurde;
bei anschließendem Aufbau eines Reifens mit der gleichen Größe wie der Reifen von der gleichen Aufbaumaschine Erhalten einer Positions- oder Winkelabweichung zwischen einer Mittelachse eines zylindrischen Karkassenbandes und einer Mittelachse des Wulstkernes, was die umgekehrte harmonische Wellenform erster Ordnung erzeugt, basierend auf der Berechnung bei Verwendung der Annahmeformel; und
Verändern der relativen Position oder des relativen Winkels zwischen der Mittelachse von mindestens einem der Wulstkerne und der Mittelachse des Karkassenbandes in einer Richtung der Abweichung und um eine Größe der Abweichung, die jeweils durch die Annahmeformel erhalten wird, um so die Wulstkernen auf das Karkassenband zu setzen.

## Revendications

1. Machine de montage de pneus (31) comprenant un dispositif de transfert de tringles (34A, 34B), incluant une paire de parties pince (36A, 36B), pour préserrer une paire de tringles (B), respectivement, et placer les tringles préserrées à des positions axialement séparées l'une de l'autre à une distance prédéterminée, et un tambour de bande (33) ayant une surface périphérique extérieure pour y appliquer une bande de carcasse (C) et provoquer une expansion radiale d'au moins une portion axiale de la carcasse de sorte qu'elle est liée par pression à des surfaces internes périphériques des tringles (B), ladite machine de montage de pneus comprenant en outre:
des moyens de contrôle de l'angle de rotation d'un tambour de bande pour faire tourner le tambour de bande (33) sur lequel la bande de carcasse (C) est appliquée, à un angle requis (ϕ) qui est déterminé par une forme d'onde de force radiale, avant le montage du pneu désiré, par rapport à un pneu de la même taille, ou par une forme d'onde caractéristique ayant une corrélation avec ladite forme d'onde de force radiale.
Un mécanisme de contrôle de l'inclinaison (43A, 44A, 45A, 46A, 47, 49A) pour entraîner un axe central d'au moins une des parties pinces (36A, 36B) dudit dispositif de transfert de tringles (34A, 34B) à s'incliner par rapport à un axe central du tambour de bande, dans une direction prédéterminée, et à un angle requis qui est déterminé par ladite forme d'onde;
Un tambour de formage (40) à appliquer sur un côté radialement extérieur d'une bande de carcasse (C), qui a été tranféré dudit tambour de bande (33) et auquel lesdites tringles (B) ont déjà été appliquées, les éléments constitutifs du pneu restant; et
Un moyen de contrôle de l'angle de rotation du tambour de formage pour faire tourner le tambour de formage (40) audit angle (ϕ) auquel le tambour de bande (33) a été tourné par ledit moyen de contrôle de l'angle de rotation du tambour de bande, dans une direction opposée.

2. Machine de montage de pneus (1) comprenant un tambour de formage (3) ayant une surface périphérique extérieure pour y appliquer une bande de carcasse (C), pour provoquer une expansion radiale d'une portion axiale centrale seulement de la bande de carcasse, et un dispositif servant à positionner le talon du pneu (4A, 4B) incluant une paire de parties pinces (6A, 6B) pour préserrer une paire de tringles, respectivement, et déplacer les parties pinces de sorte que les tringles préserrées (B) soient poussées vers des côtés axialement extérieurs vers les surfaces en escalier (D) formées sur lesdites surfaces de la portion centrale expansée de la bande de carcasse, afin de positionner les tringles sur la bande de carcasse, ladite machine de montage de pneus comprenant en outre:
un moyen de contrôle de l'angle de rotation du tambour de formage pour faire tourner le tambour de formage (3) sur lequel la bande de carcasse (C) est appliquée, à un angle requis (θ) qui est déterminé par une forme d'onde de force radiale qui est obtenue, avant la formation du pneu désiré, pour un pneu de la même taille, ou par une forme d'onde caractéristique ayant une corrélation avec ladite forme d'onde de force radiale; et
un moyen de contrôle de l'excentricité (15, 16, 17, 21, 22, 23) pour déplacer un axe central d'au moins une desdites parties pinces (6A, 6B) du dispositif servant à positionner le talon du pneu (4A, 4B) par rapport à un axe central du tambour de formage (3), à une position excentrique dans un sens prédéterminé, et à une distance requise qui est déterminée par ladite forme d'onde,
dans laquelle le moyen de contrôle de l'angle de rotation du tambour de formage est adapté pour faire pivoter ledit tambour de formage (3), sur lequel ladite bande de carcasse (C) est appliquée et lesdites tringles (B) ont été placées, audit angle (θ) pour faire pivoter la bande de carcasse, dans une direction opposée.

3. Procédé pour monter un pneu comprenant des tringles, et une cracasse s'étendant toroïdalement entre les tringles et ayant des portions latérales repliées radialement vers l'extérieur autour des tringles, ledit procédé comprenant:
la préparation d'une formule de présomption pour présumer un composant harmonique de premier ordre d'un corps de carcasse toroïdal d'une forme d'onde d'excentricité radiale qui génère une déviation positionnelle ou angulaire entre un axe central d'une bande de carcasse cylindrique (C) et un axe central de la tringle (B);
le mesure d'une déviation radiale d'un corps de carcasse toroïdal sur toute sa circonférence, et obtention d'une forme d'onde harmonique de premier ordre inversée en inversant une forme d'onde mesurée de la déviation radiale, ou en inversant un composant harmonique de premier ordre extrait de ladite forme d'onde de la déviation radiale;
obtention, lors du montage subséquent d'un pneu ayant la même taille que ledit pneu par la même machine de montage, d'une déviation positionnelle ou angulaire entre un axe central d'une bande de carcasse cylindrique et un axe central de la tringle, ce qui génère ladite forme d'onde d'harmonique de premier ordre, sur la base d'un calcul utilisant ladite formule de présomption; et
changement de la position relative ou de l'angle relatif entre l'axe central d'au moins une desdites tringles et l'axe central de la bande de carcasse, dans une direction de la déviation et d'une quantité de la déviation obtenues par ladite formule de présomption, respectivement, afin de placer les tringles sur la bande de carcasse.
